## Europäisches Patentamt

## European Patent Office

## Office européen des brevets

(11) Veröffentlichungsnummer: **0 042 183**
**B1**

(12) # EUROPÄISCHE PATENTSCHRIFT

(45) Veröffentlichungstag der Patentschrift:
**29.06.83**

(51) Int. Cl.³: **G 06 K 19/08,** B 42 D 15/02

(21) Anmeldenummer: **81200271.5**

(22) Anmeldetag: **11.03.81**

(54) **Verfahren zum Herstellen eines kartenförmigen, maschinenlesbaren Informationsträgers.**

(30) Priorität: **18.06.80 CH 4676/80**

(43) Veröffentlichungstag der Anmeldung:
**23.12.81 Patentblatt 81/51**

(45) Bekanntmachung des Hinweises auf die Patenterteilung:
**29.06.83 Patentblatt 83/26**

(84) Benannte Vertragsstaaten:
**AT BE DE FR GB IT NL SE**

(56) Entgegenhaltungen:
**DE-A-2 305 165**
**US-A-3 987 725**
**US-A-4 172 750**

(73) Patentinhaber: **Fis Organisation AG, Friedaustrasse 23, CH-8040 Zürich (CH)**

(72) Erfinder: **Ponato, Etienne, Obere Kirchstrasse 29, CH-8304 Wallisellen (CH)**

(74) Vertreter: **Seifert, Helmut E., RITSCHER & SEIFERT Patentanwälte Auf der Mauer 4, CH-8001 Zürich (CH)**

Verfahren zum Herstellen eines kartenförmigen, maschinenlesbaren Informationsträgers

Die vorliegende Erfindung betrifft ein Verfahren zum Herstellen eines kartenförmigen, maschinenlesbaren Informationsträgers mit einer ersten Schicht, die zwischen zwei weiteren, mindestens für sichtbares Licht undurchlässigen Schichten eingeschlossen ist und auf oder in der die Information bildende Daten mit einer zu mindestens einer Kante des Informationsträgers vorgegebenen Ausrichtung angeordnet sind, bei welchem Verfahren zuerst alle Schichten in der vorgesehenen Folge aufeinandergelegt und zu einem einstückigen Halbfabrikat miteinander verbunden werden, und danach mindestens eine zum Führen des Informationsträgers im Maschinenleser vorgesehene Kante geschnitten wird, sowie einen nach diesem Verfahren hergestellten Informationsträger.

Informationsträger der beschriebenen Art werden insbesondere als persönlicher Ausweis verwendet, der beispielsweise zum Betreten einer der Öffentlichkeit nicht zugänglichen Anlage oder zum Inbetriebsetzen eines nur für einen definierten Personenkreis vorgesehenen Geräts berechtigt. Um das Nachmachen solcher Informationsträger zu erschweren, sind die Daten für das menschliche Auge unsichtbar angeordnet und werden ohne direkten äusseren Kontakt, beispielsweise mit einer IR-Strahlung oder elektrisch oder magnetisch, ausgelesen. Voraussetzung dafür ist, dass beim Einlegen des Informationsträgers in ein Lesegerät die Daten in eine definierte Lage zum Lesekopf gebracht werden. Das wird üblicherweise dadurch erreicht, dass die Daten eine vorgegebene Ausrichtung zu mindestens einer Kante des Informationsträgers aufweisen, welche Kante als Führungskante in dem Lesegerät verwendet wird.

Ein Informationsträger, dessen Daten nicht sichtbar sind und eine vorgegebene Ausrichtung zu einer Führungskante aufweisen, ist beispielsweise in dem DBGM 78.12 290 (Hess) beschrieben. Bei diesem Informationsträger ist die die Daten tragende Schicht zwischen den beiden Blättern einer gefalteten Einlage aus einem undurchsichtigen Material eingeschlossen. Um die angestrebte Ausrichtung zu erreichen, sind auf der Innenseite der Einlage optische Rastermarken zum passgerechten Aufkleben der Datenträgerschicht und auf den Aussenseiten der Einlage ebensolche Marken zum Schneiden der Führungskante angeordnet. Ausserdem kann die Falzlinie der gefalteten Einlage als Anlagelinie für die Datenträgerschicht verwendet werden.

Wie die Praxis gezeigt hat, ermöglicht das manuelle Ausrichten der einzelnen Schichten des Informationsträgers nach optischen Rastermarken nur eine beschränkte Genauigkeit. Weiter kann mit solchen Marken nicht verhindert werden, dass sich die vorher ausgerichteten Schichten beim ganzflächigen Verbinden gegeneinander verschieben. Das gilt insbesondere, wenn die Schichten aus thermoplastischem Material bestehen und durch Schweissen miteinander verbunden werden, wobei das Material im Oberflächenbereich fliesst.

Es versteht sich, dass die Genauigkeit der Ausrichtung der Daten zur Führungskante um so grösser sein muss, je grösser die Anzahl der Daten auf dem Informationsträger ist. Der vorliegenden Erfindung liegt darum die Aufgabe zugrunde, ein neues Verfahren zur Herstellung eines Informationsträgers der eingangs genannten Art zu schaffen, mit dem eine bisher nicht erreichbare Genauigkeit der Ausrichtung zwischen den Daten und der Führungskante erreicht werden kann.

Erfindungsgemäss wird diese Aufgabe mit einem Verfahren gelöst, das dadurch gekennzeichnet ist, dass die erste Schicht oder ein Rahmen, in den diese Schicht so eingepasst ist, dass die Daten zu den Innenkanten des Rahmens mit einer vorgegebenen Ausrichtung angeordnet sind, mit einem zu den Daten bzw. zu mindestens einer Innenkante des Rahmens ausgerichteten ersten Führungsmittel versehen wird und danach die Führungskante in einem Schneidwerkzeug, das ein zum Positionieren des Halbfabrikats vorgesehenes, zu dem ersten Führungsmittel komplementäres, zweites Führungsmittel aufweist, geschnitten wird.

Das neue Verfahren ermöglicht, die Führungskante des Informationsträgers in Abhängigkeit von der Lage der ersten Schicht oder des Rahmens für die erste Schicht zu schneiden, unabhängig davon, wie gut diese Schicht bzw. der Rahmen zwischen den weiteren Schichten ausgerichtet ist. Dabei ermöglicht die zweidimensional wirksame Führung nicht nur, die durch mangelnde Ausrichtung der Daten zur Führungskante bedingte Fehlproduktion an Informationsträgern praktisch zu vermeiden, sondern auch die für die Ausrichtung bisher gebräuchlichen Toleranzen um den Faktor 10 bis 20 zu verkleinern.

Bei einer bevorzugten Ausführungsform des neuen Verfahrens werden alle Schichten und wahlweise die erste Schicht oder, bei der Verwendung einer gerahmten ersten Schicht, der Rahmen mit dem ersten Führungsmittel versehen, um zum Verbinden der Schichten wird eine Halterung verwendet, die ein zum Positionieren der Schichten vorgesehenes, zu dem ersten Führungsmittel komplementäres zweites Führungsmittel aufweist.

Mit dieser Massnahme kann erreicht werden, dass alle Schichten und insbesondere auch die gewöhnlich mit einem sichtbaren Aufdruck oder einer handschriftlichen Eintragung versehene Zwischenschicht eine vorgegebene Ausrichtung zur Führungskante aufweisen und auch während des Verbindens der Schichten in der vorgesehenen Ausrichtung verbleiben.

Nachfolgend werden einige Ausführungsbeispiele des neuen Verfahrens sowie von nach diesem Verfahren hergestellten Informationsträgern mit Hilfe der Figuren beschrieben. Es zeigen:

Fig. 1 die perspektivische Ansicht der einzelnen Schichten und des Rahmens für die Datenträgerschicht für eine erste Ausführungsform eines nach dem neuen Verfahren hergestellten Informationsträgers,

Fig. 2 die schematische, perspektivische Ansicht einer Halterung zum Verbinden der einzelnen Schichten, und

Fig. 3 die schematische Seitenansicht eines Schneidwerkzeugs mit dem zweiten Führungsmittel.

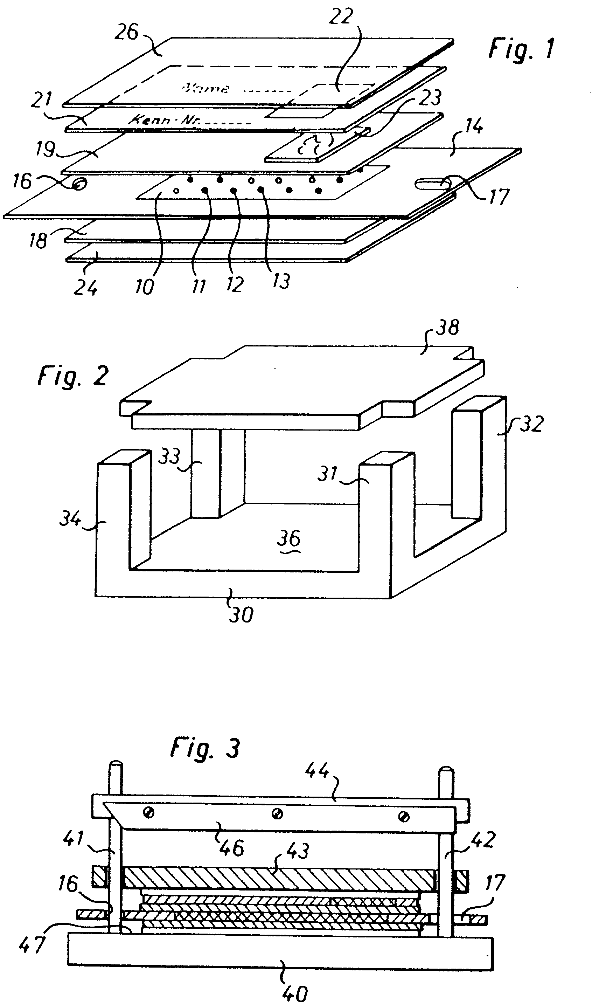

Die Fig. 1 zeigt die perspektivische Ansicht der voneinander beabstandeten Schichten für eine erste Ausführungsform eines Informationsträgers. Dieser Informationsträger enthält eine Datenträgerschicht 10, auf der die Daten in der Form kreisförmiger Metallisierungen aufgebracht sind, von denen im gezeigten Beispiel nur die Metallisierungen 11, 12, 13 mit einem Bezugszeichen identifiziert sind. Die Datenträgerschicht ist in einen Rahmen 14 eingepasst, der im Bereich seiner über die anderen Schichten vorstehenden Schmalseiten ein Rundloch 16 und ein Langloch 17 aufweist, die eine erste Führungseinrichtung bilden. Unter und über der Datenträgerschicht ist eine untere bzw. obere Abdeckschicht 18 bzw. 19 angeordnet. Diese Abdeckschichten sind mindestens für sichtbares Licht undurchlässig. Über der oberen Abdeckschicht ist weiter eine Zwischenschicht 21 angeordnet. Diese Zwischenschicht ist für die sichtbare Identifizierung des Informationsträgers vorgesehen und enthält beispielsweise eine aufgedruckte Kennummer und den Namenszug des Karteninhabers. Die gezeigte Zwischenschicht enthält ausserdem ein Fenster 22, dessen Form und Grösse mit einer auf der oberen Abdeckschicht 19 befestigten Fotografie 23 des Karteninhabers übereinstimmt. Unter der unteren Abdeckschicht und über der Zwischenschicht sind noch eine untere und eine obere transparente Deckfolie 24 bzw. 26 angeordnet.

Bei der gezeigten Ausführungsform ist die Länge der beiden Abdeckschichten, der Zwischenschicht und der beiden Deckfolien kleiner als der kürzeste Abstand zwischen dem Rund- und dem Langloch in den Schmalseiten des Rahmens, und die Breite der Schichten ist grösser als die Breite des Rahmens. Auf diese Weise ist sichergestellt, dass das Rund- und das Langloch aus den gestapelten Schichten vorstehen und ungehindert in die noch zu beschreibende zweite Führungseinrichtung eingesetzt werden können.

Die in Fig. 2 schematisch gezeigte Halterung ist zum Einlegen und ganzflächigen Verbinden der einzelnen Schichten vorgesehen. Die Halterung enthält eine rechteckige Grundplatte 30, von deren vier Ecken Führungssäulen 31, 32, 33, 34 mit quadratischem Querschnitt senkrecht nach oben abragen. Die Auflagefläche 36 der Grundplatte bildet ein Kreuz, dessen von den Führungssäulen 31, 32 bzw. 33, 34 begrenzter Querbalken zum Einlegen der überstehenden Seitenteile der Datenträgerschicht bzw. des Rahmens und dessen von den Führungssäulen 31, 34 und 32, 33 begrenzter Längsbalken zum Einlegen der anderen Schichten vorgesehen ist. Zur Halterung gehört eine Deckplatte 38, deren Form der Auflagefläche entspricht und die zwischen die Führungssäulen eingesetzt werden kann. Zum Zusammenpressen der eingelegten Schichten kann die Halterung in eine Presse eingeführt werden oder selbst eine geeignete Einrichtung zum Anpressen der Deckplatte aufweisen. Wird die Halterung zum Verschweissen von Kunststoffolien verwendet, dann sind sowohl die Grundplatte als auch die Deckplatte mit einer geeigneten Heizeinrichtung versehen.

Die Fig. 3 zeigt die schematische und teilweise geschnittene Seitenansicht eines Schneidwerkzeugs mit einem eingelegten Halbfabrikat. (Die Schichten und Folien sind der deutlicheren Darstellung wegen unverhältnismässig dick gezeichnet.) Das Schneidwerkzeug enthält einen Sockel 40, in den zwei Führungssäulen 41, 42 eingesetzt sind. Die Führungssäulen führen eine in vertikaler Richtung verschiebbare Halteplatte 43, die zum Andrücken des Halbfabrikats an die Auflagefläche des Sockels vorgesehen ist. Weiter ist an den Führungssäulen eine Schneidplatte 44 verschiebbar angeordnet. An der Schneidplatte ist ein Schneidmesser 46 befestigt, das mit einer am Sockel angeordneten Schneidkante 47 zusammenwirkt. Solche Schneid- oder Stanzwerkzeuge sind jedem Fachmann bekannt, weshalb hier auf eine detaillierte Beschreibung verzichtet wird.

Das Material für die Datenträgerschicht wird entsprechend der Ausbildung der Daten und der Art, wie diese gelesen werden sollen, ausgewählt und kann beispielsweise Papier, Kunststoff oder eine Metallfolie sein. Die Daten können als elektrisch, magnetisch oder optisch detektierbare Marken oder Leiterzüge ausgebildet sein, die auf den Träger geklebt oder gedruckt oder aus dem Träger ausgestanzt sind. Kann das Material des Datenträgers nicht mit den anderen Schichten verklebt oder verschweisst werden, dann ist ein Rahmen erforderlich, der den Datenträger umfasst und führt und der mit den anderen Schichten verklebbar oder verschweissbar ist. Um die erforderliche Ausrichtung zwischen den Daten und dem Führungsmittel zu erreichen, werden die Daten und Rastermarkierungen für die Führungsmittel bzw. die in einen Rahmen einzupassenden Kanten des Datenträgers vorzugsweise im gleichen Arbeitsgang aufgebracht oder das Führungsmittel bzw. die einzupassenden Kanten im gleichen Arbeitsgang geschnitten. Das gleiche gilt für den wahlweise verwendeten Rahmen, dessen Innenkanten und (soweit vorhanden) Führungsmittel ebenfalls vorzugsweise im gleichen Arbeitsgang ausgestanzt werden.

Es versteht sich, dass die Abdeckschichten, die Zwischenschicht und die Deckschichten für dasjenige Medium durchlässig sein müssen, das zum Auslesen der Daten verwendet wird. Es versteht sich auch, dass die Datenträgerschicht und der Rahmen bzw. die Zwischenschicht und die Fotografie gleiche Dicke aufweisen, wenn der fertige Datenträger eine gleichmässige Dicke und keine reliefartigen Ausformungen aufweisen soll.

Zur Herstellung des neuen Datenträgers werden die einzelnen Schichten in der oben beschriebenen Folge aufeinandergelegt und ganzflächig dauerhaft miteinander verbunden. Dazu können die Schichten auf den aneinanderliegenden Flächen mit einem Klebmittel versehen, oder es kann eine Klebfolie zwischen die Schichten eingelegt werden. Vorzugsweise werden für die einzelnen Schichten bzw. den Rahmen thermoplastische Materialien, beispielsweise verschiedene PVC-Folien, verwendet, die unter der Einwirkung von Wärme und Druck miteinander verschweisst werden können. Dazu werden die Folien in die in Fig. 2 gezeigte Halterung eingelegt und während etwa 5 Minuten auf eine Temperatur von 150 bis 170°C erwärmt und zugleich mit einem Druck von etwa 70 kp/cm² zusammengepresst. Die zu einem einstückigen Halbfabrikat verbundenen Schichten werden dann mit Hilfe der ersten Führungsmittel an den vorstehenden Enden der Datenträgerschicht oder an dem Rahmen in das Schneidwerkzeug eingelegt, das ein komplementäres zweites Führungsmittel aufweist und dessen Schneidklinge in einer vorgegebenen Ausrichtung zum zweiten Führungsmittel angeordnet ist. Auf diese Weise ist sichergestellt, dass das Schneidwerkzeug mindestens eine Führungskante in genauer Ausrichtung zu den Daten auf der Datenträgerschicht schneidet.

Es versteht sich, dass das beschriebene Verfahren und die zu dessen Ausführung verwendeten Werkzeuge sowie der nach dem Verfahren hergestellte Informationsträger an spezielle Anforderungen oder Betriebsbedingungen angepasst und dazu auf vielerlei Weise abgewandelt werden können. Beispielsweise ist es möglich, dass der Informationsträger mehr oder weniger als die beschriebenen sechs Schichten aufweist. Es ist auch möglich, die Daten als Hologramm oder als elektronische Dünnschichtschaltung mit Kondensatoren, Widerständen und Halbleiterbauelementen auszubilden. Weiter kann die Qualität der Informationsträger wesentlich verbessert werden, wenn alle Schichten etwa gleich gross sind und mit dem ersten Führungsmittel versehen werden, und auch die zum Verkleben und Verschweissen verwendete Halterung zweite Führungsmittel aufweist. Diese Führungsmittel können vorteilhafterweise als Säulen ausgebildet sein, die den beschriebenen Führungssäulen am Schneidwerkzeug entsprechen und zwischen den den Querbalken der Auflageflächen begrenzenden Führungssäulen angeordnet sind. Das ermöglicht dann, die Schichten mit einer vorgebbaren gegenseitigen Ausrichtung miteinander zu verbinden, was insbesondere für die Zwischenschicht wichtig sein kann. Weiter wird vorzugsweise ein Schneidwerkzeug verwendet, das nicht nur die Führungskante, sondern gleichzeitig die gesamte Umrandung des Informationsträgers abschneidet. Schliesslich ist es nicht notwendig, dass das erste Führungsmittel zweiteilig ist oder in den überstehenden und zum Abschneiden vorgesehenen Randteilen des Datenträgers oder Rahmens angeordnet ist. Das Führungsmittel kann beispielsweise auch in der Mitte der Schichten angeordnet sein und zur verdrehungsfreien Führung einen kreuz- oder kissenförmigen Querschnitt aufweisen. Ein solches auch im fertigen Informationsträger verbleibendes Führungsmittel kann dann zum Transport und/oder zum Halten des Informationsträgers im Leser verwendet werden.

Es versteht sich, dass auch bei dem neuen Informationsträger eine reliefartig strukturierte untere Abdeckschicht und eine mattierte obere Abdeckschicht verwendet werden können, um das Abformen der Daten bzw. deren Abbildung im reflektierten Licht zu vermeiden.

**Patentansprüche**

1. Verfahren zum Herstellen eines kartenförmigen, maschinenlesbaren Informationsträgers mit einer ersten Schicht, die zwischen zwei weiteren, mindestens für sichtbares Licht undurchlässigen Schichten eingeschlossen ist und auf oder in der die Information bildende Daten mit einer zu mindestens einer Kante des Informationsträgers vorgegebenen Ausrichtung angeordnet sind, bei welchem Verfahren zuerst alle Schichten in der vorgesehenen Folge aufeinandergelegt und zu einem einstückigen Halbfabrikat miteinander verbunden werden, und danach mindestens eine zum Führen des Informationsträgers im Maschinenleser vorgesehene Kante geschnitten wird, dadurch gekennzeichnet, dass die erste Schicht oder ein Rahmen, in den diese Schicht so eingepasst ist, dass die Daten zu den Innenkanten des Rahmens mit einer vorgegebenen Ausrichtung angeordnet sind, mit einem zu den Daten bzw. zu mindestens einer Innenkante des Rahmens ausgerichteten ersten Führungsmittel versehen wird und danach die Führungskante in einem Schneidwerkzeug, das ein zum Positionieren des Halbfabrikats vorgesehenes, zu dem ersten Führungsmittel komplementäres, zweites Führungsmittel aufweist, geschnitten wird.

2. Verfahren nach Anspruch 1, dadurch gekennzeichnet, dass das erste Führungsmittel von einem Langloch und einem in der Verlängerung des grösseren Durchmessers des Langlochs angeordneten Rundloch gebildet wird und das zweite Führungsmittel von zwei Führungsstiften, deren Durchmesser der Breite des Langlochs bzw. dem Durchmesser des Rundlochs und deren Abstand voneinander dem Abstand zwischen den Mitten des Lang- und des Rundlochs entspricht.

3. Verfahren nach Anspruch 1, dadurch gekennzeichnet, dass das erste Führungsmittel von einem ausgebrochenen Vieleck und das zweite Führungsmittel von einem Führungsstift mit einem zu dem ausgebrochenen Vieleck komplementären Querschnitt gebildet wird.

4. Verfahren nach Anspruch 1, dadurch gekennzeichnet, dass das erste Führungsmittel ausserhalb der für den fertigen Informationsträger vorgesehenen Umrandung angeordnet und mit dieser Umrandung abgeschnitten wird.

5. Verfahren nach Anspruch 1, dadurch gekennzeichnet, dass die mindestens für sichtbares Licht undurchlässigen Schichten mit je einer transparenten Deckschicht überschichtet werden.

6. Verfahren nach Anspruch 1, dadurch gekennzeichnet, dass zwischen die eine der mindestens für sichtbares Licht undurchlässigen Schichten und die benachbarte transparente Deckschicht eine vorher mit unmittelbar erkennbaren Informationen versehene Zwischenschicht eingelegt wird.

7. Verfahren nach Anspruch 1, dadurch gekennzeichnet, dass alle Schichten und bei Verwendung einer gerahmten ersten Schicht mindestens der Rahmen aus Thermoplasten bestehen und durch Schweissen ganzflächig miteinander verbunden werden.

8. Verfahren nach Anspruch 1, dadurch gekennzeichnet, dass alle Schichten und wahlweise die erste Schicht oder, bei Verwendung einer gerahmten ersten Schicht, der Rahmen mit dem ersten Führungsmittel versehen sind um zum Verbinden zu dem Halbfabrikat in eine Halterung, die einzum Positionieren der Schichten vorgesehenes, zu dem ersten Führungsmittel komplementäres zweites Führungsmittel aufweist, eingelegt werden.

9. Verfahren nach Anspruch 1, dadurch gekennzeichnet, dass in dem Schneidwerkzeug im gleichen Arbeitsgang alle Kanten des Informationsträgers geschnitten werden.

10. Nach dem Verfahren gemäss Anspruch 1 hergestellter Informationsträger, dadurch gekennzeichnet, dass die Toleranz der Ausrichtung der Daten auf der ersten Schicht zu der mindestens einen Kante kleiner ist als 1 mm.

**Claims**

1. Method of making a card-shaped, machine-readable information carrier, comprising a first layer, which is enclosed between two further layers opaque at least to visible light, and upon or in which layer data constituting the information are disposed with a predetermined alignment relative to at least one edge of the information carrier, in which method firstly all the layers are laid one upon another in the intended sequence and are bonded to one another to form an integral semifinished product, and thereafter at least one edge intended for guiding the information carrier in the machine reader is cut, characterized in that the first layer, or a frame into which this layer is so fitted that the data are disposed with a predetermined alignment relative to the inner edges of the frame, is furnished with a first guide means aligned relative to the data or to at least one inner edge of the frame and therafter the guide edge is cut in a cutting tool, which possesses a second guide means, complementary to the first guide means and provided for positioning the semifinished product.

2. Method according to Claim 1, characterized in that the first guide means is constituted of an elongated hole and of a round hole disposed in the extension of the larger diameter of the elongated hole, and the second guide means is constituted of two guide pins, the diameter of which corresponds to the width of the elongated hole and the diameter of the round hole respectively, and the distance of which from one another corresponds to the distance between the centres of the elongated and of the round hole.

3. Method according to Claim 1, characterized in that the first guide means is constituted of a cut-out polygon and the second guide means is constituted of a guide pin having a cross-section complementary to the cut-out polygon.

4. Method according to Claim 1, characterized in that the first guide means is disposed outside the border intended for the finished information carrier and is cut away together with this border.

5. Method according to Claim 1, characterized in that the layers which are opaque at least to visible light are each coated with a transparent covering layer.

6. Method according to Claim 1, characterized in that, between the one of the layers opaque to at least visible light and the adjacent transparent covering layer, an intermediate layer previously furnished with directly recognizable information is placed.

7. Method according to Claim 1, characterized in that all the layers and, where a framed first layer is used, at least the frame, are of thermoplastics material and are bonded together over their entire areas by sealing.

8. Method according to Claim 1, characterized in that all the layers and optionally the first layer or, where a framed first layer is used, the frame, are provided with the first guide means and, for bonding them to form the semifinished product, are laid in a mounting which possesses a second guide means, complementary to the first guide means and provided for the positioning of the layers.

9. Method according to Claim 1, characterized in that all the edges of the information carrier are cut in the same operation in the cutting tool.

10. Information carrier made according to the method of Claim 1, characterized in that the tolerance of the alignment of the data on the first layer to the at least one edge is smaller than 1 mm.

**Revendications**

1. Procédé pour fabriquer un support d'information en forme de carte qui est lisible par une machine et comporte une première couche qui est comprise entre deux autres couches opaques au moins à la lumière visible et sur ou dans laquelle les données constituant l'information sont disposées avec un alignement prédéterminé par rapport à au moins un bord du support d'information, procédé selon lequel on dispose d'abord l'ensemble des couches les unes sur les autres dans l'ordre prédéterminé et on les relie les unes aux autres pour constituer un produit semi-fini d'une seule pièce, puis on découpe au moins un bord destiné au guidage du support d'information dans le lecteur-machine, caractérisé en ce qu'on munit la première couche ou un cadre dans lequel cette couche est emboîtée de telle manière que les données sont disposées par rapport aux bords internes du cadre avec un alignement prédéterminé, d'un premier moyen de guidage aligné par rapport aux données ou respectivement par rapport à au moins un bord interne du cadre, puis en ce qu'on découpe le bord de guidage dans un outil de découpage qui présente un second moyen de guidage, complémentaire du premier moyen de guidage et prévu pour le positionnement du produit semifini.

2. Procédé selon la revendication 1, caractérisé en ce qu'on réalise le premier moyen de guidage par un trou oblong et un trou rond disposé dans le prolongement du plus grand diamètre du trou oblong et le second élément de guidage par deux tenons de guidage dont le diamètre correspond à la largeur du trou oblong ou au diamètre du trou rond et dont la distance mutuelle correspond à la distance comprise entre le milieu du trou oblong et le milieu du trou rond.

3. Procédé selon la revendication 1, caractérisé en ce qu'on réalise le premier moyen de guidage par un polygone à angles brisés et le second élément de guidage par un tenon de guidage ayant une section complémentaire de celle du polygone à angles brisés.

4. Procédé selon la revendication 1, caractérisé en ce qu'on dispose le premier moyen de guidage en dehors de la marque prévue pour le support d'information achevé et on l'élimine par découpage avec cette marge.

5. Procédé selon la revendication 1, caractérisé en ce qu'on recouvre d'une couche de recouvrement transparente chacune des couches opaques au moins à la lumière du jour.

6. Procédé selon la revendication 1, caractérisé en ce qu'on dispose, entre l'une des couches opaques au moins à la lumière visible et la couche de recouvrement transparente voisine, une couche intermédiaire préalablement munie d'informations directement reconnaissables.

7. Procédé selon la revendication 1, caractérisé en ce que toutes les couches et, lorsqu'on utilise une première couche encadrée, au moins le cadre sont composés de matières thermoplastiques et en ce qu'on les lie les unes aux autres par soudage sur toute leur surface.

8.Procédé selon la revendication 1, caractérisé en ce qu'on munit du premier moyen de guidage toutes les couches et, au choix, la première couche ou, lorsqu'on utilise une première couche encadrée, le cadre, pour réaliser la liaison en vue d'obtenir le produit semi-fini, on les dispose dans une fixation qui présente un second moyen de guidage complémentaire du premier moyen de guidage et prévu pour le positionnement des couches.

9.Procédé selon la revendication 1, caractérisé en ce que, dans l'outil de découpage, on découpe tous les bords du support d'information par la même passe de travail.

10.Support d'information fabriqué selon le procédé de la revendication 1, caractérisé en ce que la tolérance de l'alignement des données sur la première couche par rapport à au moins un bord est inférieure à 1 mm.

0 042 183

Fig. 1

Fig. 2

Fig. 3

7